# EUROPEAN PATENT APPLICATION

(11) **EP 4 527 596 A1**
(43) Date of publication of application: **26.03.2025**
(21) Application number: 23199334.6
(22) Date of filing: 25.09.2023
(51) Int. Cl.: B29C 65/16, B29C 65/78, F21S 41/00

(54) **ASSEMBLY METHOD OF AN AUTOMOTIVE LIGHTING UNIT AND MACHINE IMPLEMENTING SAID METHOD**

(71) Applicant: Marelli Automotive Lighting Italy S.p.A. Con Socio Unico, 10078 Venaria Reale (TO) (IT)
(72) Inventor: BUZZURRO, Alessandro, 33028 Tolmezzo (UD) (IT); FERIGO, Domenico, 33028 Tolmezzo (UD) (IT)
(74) Representative: Studio Torta S.p.A.

(57) **Abstract**

An assembly method of an automotive lighting unit (100) comprising: a rear casing (101), which has a concave shape and is adapted to be fixed to the vehicle body; an at least partially transparent front half-shell (102), which is positioned to close the mouth of said rear casing (101) so as to form/delimit a hollow housing; and at least one lighting assembly (103), which is located inside the rear casing (101) and is adapted to backlight the front half-shell (102); the assembly method comprising the steps of: producing a rear casing (101) with at least one sector made of opaque polymeric material; producing at least one internal lighting component (104) having at least one portion made of opaque polymeric material; positioning said at least one internal lighting component (104) inside the rear casing (101), with said portion made of opaque polymeric material resting on the sector made of opaque polymeric material of the rear casing (101), in the area of at least one contact area (105); and fixing said at least one internal lighting component (104) to the rear casing (101) forming at least one laser welding joint (106) at said at least one contact area (105).

## Description

### TECHNICAL FIELD

The present invention concerns an assembly method of an automotive lighting unit and a machine implementing said method.

In further detail, the present invention relates to a method and a machine for fixing components made of opaque plastic material inside the rear casing of a headlight or taillight for cars and similar motor vehicles. Uso to which the following disclosure will explicitly refer without however losing generality.

### STATE OF THE ART

As known, a headlight or taillight for cars and similar motor vehicles is conventionally a lighting apparatus specifically structured to be placed in the front, rear or lateral part of the vehicle, and performs the function of lighting the area surrounding the vehicle and/or the function of signalling the position of the vehicle, sudden deceleration of the vehicle and/or turning direction of the vehicle, in compliance with given photometric type-approval standards.

The majority of taillights for cars and similar motor vehicles usually comprise: a rear casing with substantially rigid and opaque structure, which is substantially basin-shaped and is structured so as to be stably recessed in a purposely provided compartment realized in the rear part of the vehicle body; a front half-shell with substantially rigid and transparent structure, separate and distinct from the rear casing, which has a shape complementary to the mouth of the rear casing and is arranged to close the mouth of the rear casing, usually so as to surface outside of the vehicle body; and a series of electrically-powered lighting assemblies, which are located inside the rear casing, each one immediately beneath a corresponding transparent or semi-transparent sector of the front half-shell, so as to selectively backlight the overlying transparent or semi-transparent sector of the front half-shell.

Generally each transparent or semi-transparent sector of the front half-shell is also uniquely associated to a specific light signal, hence the various lighting assemblies inside the hollow housing formed/delimited by the front half-shell and by the rear casing are structured so as to emit, on command, a light beam which, once exited from the lighting unit through the corresponding transparent or semi-transparent sector of the half-shell, meets the photometric type-approval standards (light colour and distribution) specified for said light signal.

Currently, both the rear casing and the front half-shell have a monolithic structure and are made of polymeric material by injection moulding.

In further detail, the rear casing is made entirely of opaque polymeric material, whereas the front half-shell is made entirely, or almost entirely, of transparent and/or semi-transparent polymeric material.

In the latest headlights and taillights, furthermore, the front half-shell is joined in a non-removable manner to the rear casing via laser welding along the entire perimeter rim of the mouth of the rear casing.

The lighting assemblies that are placed inside the rear casing usually use a series of LEDs (acronym of Light Emitting Diode) as light sources, and generally also include one or more reflector bodies that reflect the light produced by the LEDs towards the facing transparent or semi-transparent sector of the front half-shell, and/or one or more light-guide bodies that collect the light produced by the LEDs and channel it by total internal reflection to the facing transparent or semi-transparent sector of the front half-shell.

In addition, these lighting assemblies usually also comprise filters, corrective optics, shielding masks and/or other active and/or passive optical devices, which are able to adapt the light beam emitted by the various LEDs to the photometric and aesthetic requirements associated with automotive use.

Lastly, the majority of the taillights described above are additionally provided with internal bezels, brackets and/or other support members that fit into the rear casing, or more simply rest on the inner surface of the rear casing, and are structured to support the printed circuit board(s) that accommodate the LEDs, the reflector body or bodies, the light-guide body or bodies and/or the other active and/or passive optical devices that contribute in forming each lighting assembly, and/or the electric wiring that powers and/or controls the various lighting assemblies.

It is known the possibility of fixing the internal lighting components made of transparent polymeric material in a rigid and non-removable manner to the rear casing via laser welding.

Said possibility, however, is ruled out for the internal components made of opaque polymeric material due to the operating limits associated to the current laser welding processes, such as, for example, the destructive overheating of the opaque polymeric material hit by the laser beam.

Clearly this operating limit considerably complicates the assembly of the taillights, because the internal components made of opaque polymeric material are the most numerous inside the taillight.

Currently, in fact, the majority of the components that contribute in forming the lighting assemblies of the taillight and the majority of the internal support members are made of opaque polymeric material and are firmly fixed to the rear casing by means of a series of self-threading metal screws, the majority of which are inserted in pass-through manner in the rear casing from the outside towards the inside of the taillight, so as to arrange the head of the screw in abutment on the outer surface of the casing.

In addition, some internal components of the automotive lighting unit can be retained inside the casing also by a series of shoulders, centring pins and/or snap-on locking tabs made inside the rear casing. These centring and/or snap-on locking systems, however, are used only during the assembly of the lighting unit, because they are generally not able to withstand the mechanical vibrations to which automotive lighting units are normally subjected to during use.

Currently, therefore, self-threading screws are the only means able to secure the main components or macro-components of the automotive lighting unit firmly in place inside the rear casing for the entire life of the same automotive lighting unit.

The present-day assembly lines for automotive lighting units are therefore currently provided with a series of automatic or semi-automatic screwdrivers, which enable the operators working on the assembly line to place and screw the self-threading screws into the rear casing as rapidly as possible.

Unfortunately, although essential for realizing the taillight, the self-threading screws make the assembly of the taillight relatively laborious and also significantly affect the overall weight and cost of the light. Being made of metal, in fact, the self-threading screws are some of the most costly components of the lighting unit.

In addition, the self-threading screws occasionally jam inside the automatic screwdriver, making the tool unserviceable, with all the problems that this entails. Restoring the automatic or semi-automatic screwdriver, in fact, can require several minutes, during which the assembly line is necessarily at a standstill.

### OBJECT OF THE INVENTION

Aim of the present invention is to eliminate or in any case minimize the use of self-threading screws, so as to simplify and speed up the assembly of automotive lighting units.

In accordance with these aims, according to the present invention there is provided an assembly method of an automotive lighting unit as defined in Claim 1 and preferably, though not necessarily, in any one of the dependent claims.

In addition, according to the present invention, there is provided an automotive-lighting-units assembly machine as defined in Claim 13 and preferably, though not necessarily, in any one of the dependent claims.

Lastly, according to the present invention, there is provided an automotive lighting unit as defined in Claim 16 and preferably, though not necessarily, in any one of the dependent claims.

### BRIEF DESCRIPTION OF THE FIGURES

The present invention will now be described with reference to the attached drawings, which illustrate a non-limiting embodiment example thereof, in which:
- Figure 1 is a schematic front view of an automotive-lighting-units assembly machine realized according to the teachings of the present invention, with parts removed for clarity's sake;
- Figure 2 is a perspective view of an automotive lighting unit realized according to the teachings of the present invention, with parts in section and parts removed for clarity's sake;
- Figure 3 is a partially-exploded perspective view of the automotive lighting unit illustrated in figure 2, with parts removed for clarity's sake;

- Figure 4 is a lateral view of the automotive lighting unit illustrated in Figures 2 and 3, with parts in section and parts removed for clarity's sake;
- Figure 5 is a perspective view of the lower workpiece carrying fixture of the machine illustrated in Figure 1, with parts removed for clarity's sake;
- Figures 6, 7, 8 and 9 show in a perspective view, with parts in section and parts removed for clarity's sake, some steps of the assembly of the automotive lighting unit implemented by the machine illustrated in Figures 1 and 5;
- Figures 10 and 11 show the temperature trends during some experimental tests; whereas
- Figure 12 schematically shows a variation of the assembly method of the automotive lighting unit illustrated in Figures 2, 3 and 4.

### DETAILED DISCLOSURE OF EMBODIMENTS

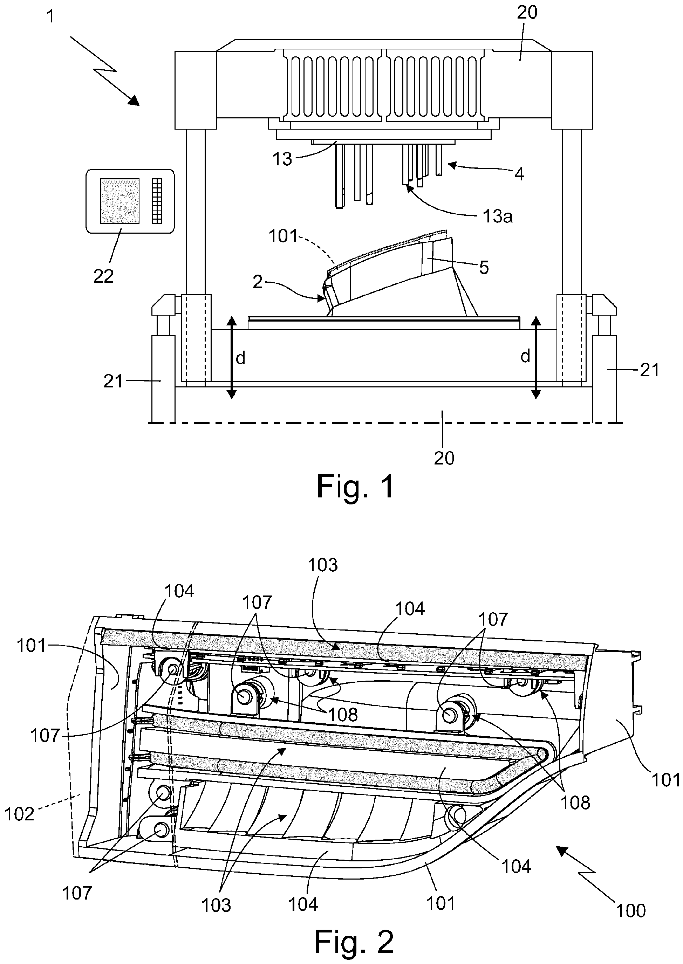

With reference to Figure 1, number 1 denotes as a whole an automotive-lighting-units assembly machine, which is adapted to carry out the laser welding of plastic parts.

In further detail, the machine 1 is specifically structured to laser-weld, directly on the rear casing of an automotive lighting unit 100, at least part of the components made of opaque polymeric material, which are located inside the rear casing and contribute in forming the automotive lighting unit 100.

The term "automotive lighting unit" indicates a lighting apparatus structured to be firmly fixed on the front or rear part of the vehicle body of a motor vehicle (not illustrated), with the function of emitting light signals adapted to signal/ indicate the position of the vehicle and/or the sudden deceleration of the vehicle and/or the turning direction of the vehicle during travel and/or with the function of lighting the area surrounding the vehicle.

In further detail, the automotive lighting unit 100 is adapted to be fixed on the front or rear part of the vehicle body of a car, van, lorry, motorcycle or other similar motor vehicle, to perform the function of a headlight or taillight.

Optionally, the automotive lighting unit 100 may also be used to display luminous signs and/or graphic or alphanumeric symbols.

Clearly the automotive lighting unit 100 may also be placed on a lateral side of the car or other similar motor vehicle.

Preferably the automotive lighting unit 100 is moreover structured so as to be stably recessed into the vehicle body (not illustrated) and to surface outside of the latter.

With reference to figures 2, 3 and 4, in particular, the automotive lighting unit 100 comprises: a substantially rigid rear casing 101, which is concave in shape and is adapted to be firmly fixed to the vehicle body (not illustrated), preferably inside a seat specifically provided in said body; and a substantially rigid and at least partially transparent, front half-shell 102, separate and distinct from the rear casing 101, which has a roughly lenticular shape/structure and is firmly fixed to the rear casing 101 to at least partially close the mouth of the latter, so as to form/delimit, together with the rear casing 101, an internally hollow rigid housing.

In further detail, the rear casing 101 is preferably shaped substantially in the form of an, advantageously oblong, basin and/or has a nominal thickness preferably between 1 and 4 mm (millimetres).

In addition, the rear casing 101 has a structure which is overall opaque to visible light and is at least partially made of polymeric material. In other words, the rear casing 101 is at least partially made of opaque polymeric material.

The front half-shell 102, on the other hand, has a structure which is overall transparent to visible light and is preferably at least partially made of transparent polymeric material.

Preferably, the front half-shell 102 is furthermore shaped/ structured so as to substantially entirely close the mouth of the rear casing 101.

In other words, the front half-shell 102 is preferably shaped so as to form/delimit, together with the rear casing 101, a rigid, closed and internally hollow housing.

Preferably the front half-shell 102 is furthermore shaped and structured so as to surface outside of the vehicle body.

Moreover, the automotive lighting unit 100 additionally comprises a series of internal lighting components, which contribute in forming one or more lighting assemblies 103, each of which is located inside the rear casing 101 and is adapted to backlight the front half-shell 102.

Preferably the lighting assembly/assemblies 103 is/are furthermore electrically-powered lighting assemblies which is/ are adapted to emit light on command and is/are advantageously also entirely contained inside the rear casing 101.

In other words, the automotive lighting unit 100 preferably comprises one or more electrically-powered lighting assemblies 103, each of which emits light on command and is located inside the rear casing 101 so as to selectively backlight the front half-shell 102.

In further detail, with reference to Figures 2, 3 and 4, the rear casing 101 preferably has a monolithic structure, and is preferably made entirely or almost entirely of polymeric material opaque to visible light, advantageously by injection moulding.

Similarly the front half-shell 102 preferably has a monolithic structure, and is preferably entirely or almost entirely made of polymeric material transparent to visible light, advantageously by injection moulding.

In addition, the front half-shell 102 preferably has a shape substantially complementary to the mouth of rear casing 101, and is preferably firmly fixed to the rear casing 101 along the perimeter rim of said mouth.

Preferably, the front half-shell 102 is furthermore rigidly fixed to the rear casing 101 in a substantially fluid-tight manner.

In further detail, the front half-shell 102 is preferably fixed in a non-removable manner to the rear casing 101 via welding.

In greater detail, the front half-shell 102 is preferably fixed in a non-removable manner to the rear casing 101 via a welding bead that extends along the perimeter rim of the mouth of rear casing 101, advantageously substantially seamlessly.

In the example shown, in particular, the automotive lighting unit 100, or rather the rear casing 101, is preferably structured so as to be recessed in the rear part of the vehicle body of a car or other similar motor vehicle.

In other words, the automotive lighting unit 100 is preferably a taillight for cars and the like.

Clearly the automotive lighting unit 100 may also be a headlight for cars and the like.

Obviously, in a different embodiment, the automotive lighting unit 100 may also be structured so as to be simply cantilever-fixed on the front, lateral or rear part of the vehicle body (not illustrated).

With reference to Figures 2, 3 and 4, in the example shown, in particular, the rear casing 101 is preferably made entirely or almost entirely of a thermoplastic polymer opaque to visible light.

In further detail, the rear casing 101 is preferably made entirely or almost entirely of acrylonitrile-butadiene-styrene (ABS) or other polymeric material filled with carbon black or other opacifying pigment.

Preferably the rear casing 101 is moreover provided, on the outer surface, with a series of bushings and/or other fixing appendages that allow the rear casing 101 to be rigidly secured to the vehicle body (not illustrated).

Obviously, in a different embodiment, the rear casing 101 may also be shaped and/or structured so as to be at least partially recessed into a seat specifically realized in the front or lateral part of the vehicle body (not illustrated), or so as to be simply cantilever-fixed on the front, lateral or rear part of the vehicle body.

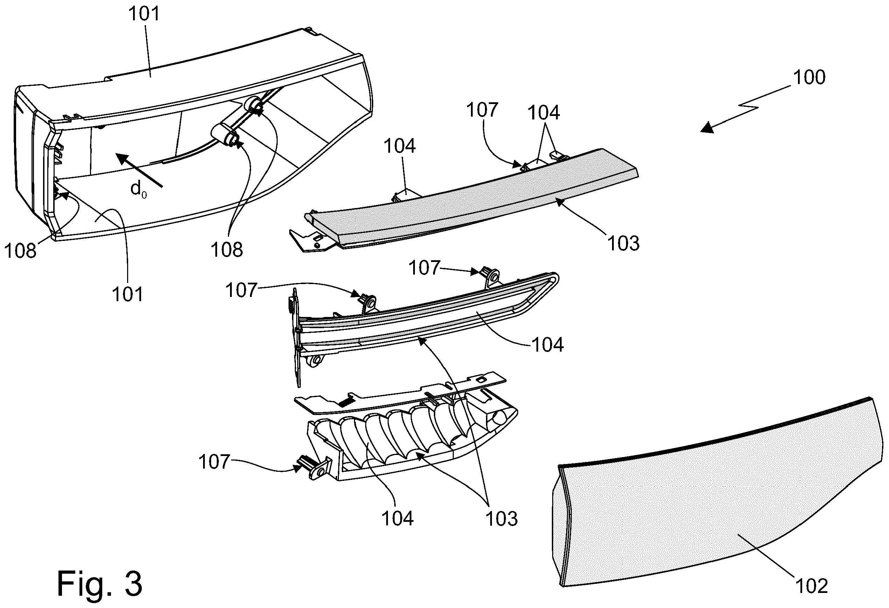

With reference to Figures 2 and 3, the front half-shell 102, on the other hand, is provided with one or more transparent or semi-transparent sectors (i.e. sectors that allow the passage of visible light), optionally also having different colours from one another, and is preferably made entirely or almost entirely of a transparent thermoplastic polymer.

In further detail, the front half-shell 102 is preferably made of transparent polycarbonate (PC), transparent polymethylmethacrylate (PMMA) or other transparent or semi-transparent polymeric material.

Clearly the front half-shell 102 may also include one or more opaque sectors adjoining said transparent or semi-transparent sector(s) .

Preferably the front half-shell 102 is furthermore welded directly to the rear casing 101 in known manner, via laser welding, vibration welding or hot-plate welding.

With reference to Figures 2, 3 and 4, the/each lighting assembly 103 is preferably located inside the rear casing 101 so as to be locally aligned to a corresponding transparent or semi-transparent sector of the front half-shell 102, thus to selectively backlight the same transparent or semi-transparent sector of the front half-shell 102, preferably separately and independently of the other lighting assemblies 103 of the automotive lighting unit 100.

Preferably the/each of the lighting assemblies 103 is furthermore structured so as to emit, on command, a light beam which, once exited from the automotive lighting unit 100 through the front half-shell 102, meets the photometric type-approval standards (light colour and distribution) specified for a given light signal.

Clearly one or some lighting assemblies 103 may also emit a light beam that does not meet or must meet said photometric type-approval standards.

For example, one or some lighting assemblies 103 may be used to display luminous signs and/or luminous graphic or alphanumeric symbols.

With reference to Figures 2, 3 and 4, in particular, the automotive lighting unit 100 is provided with a plurality of internal lighting components, separate and distinct from the rear casing 101 and from the front half-shell 102, which preferably contribute in forming the lighting assembly/ assemblies 103.

Some of these internal lighting components are substantially rigid and at least partially made of polymeric material opaque to visible light.

In addition, one or more of these internal lighting components at least partially made of opaque polymeric material, in the following denoted by number 104, is/are arranged with the part made of opaque polymeric material resting on the inner surface of the rear casing 101 at respective mutual contact areas 105, and are rigidly and non-removably fixed directly to the rear casing 101 by means of at least one laser welding joint 106 made at said mutual contact area(s) 105.

Preferably the contact area 105 between the rear casing 101 and the internal component 104 is furthermore substantially flat.

The laser welding joint 106, on the other hand, is preferably substantially spotlike and/or has an extension less than or equal to 100 mm² (square millimetres). Clearly the laser welding joint 106 106 may also have the shape of a line.

In other words, each internal component 104 is arranged with the part made of opaque polymeric material resting on the inner surface of the rear casing 101 in at least one contact area or zone 105, and is rigidly and non-removably secured to the rear casing 101 by means of at least one laser welding joint 106 made at said contact area or zone 105.

At the mutual contact area 105, therefore, the rear casing 101 and the internal component 104 are both made of polymeric material opaque to visible light.

Clearly the laser welding joint 106 is made in the mutual contact area 105, straddling a portion of the rear casing 101 and the adjacent portion of the internal component 104, both made of opaque polymeric material.

In further detail, the internal component or components 104 preferably has/have a monolithic structure, and is/are preferably made entirely of opaque polymeric material, advantageously by injection moulding. In other words, the internal component or components 104 is/are preferably made entirely of an opaque thermoplastic polymer.

In addition, the rear casing 101 and the internal component or components 104 are preferably made of respective opaque polymeric materials which have, at least in the neighbourhood of the mutual contact area 105, different laser beam absorption coefficients µ (Beer-Lambert law).

In other words, the contact area 105 between the rear casing 101 and the internal component 104 is formed/defined by two pieces or portions made of polymeric material opaque to visible light, which preferably have different laser beam absorption coefficients µ.

More specifically, at the contact area 105 the difference between the absorption coefficients µ of the two opaque polymeric materials is preferably higher than 35% of the absorption coefficient µ with higher value.

Clearly the absorption coefficient µ depends on the composition of the polymeric material, the density of the polymeric material, the quantity of carbon black or other additive contained in the polymeric material per unit of volume, and/or the wavelength λ of the laser beam that penetrates into the polymeric material.

Alternatively, the rear casing 101 and the internal lighting component or components 104 may be made of opaque polymeric materials having, at least in the neighbourhood of the mutual contact area 105, substantially equal absorption coefficients µ.

The internal lighting component or components 104 preferably include, for example, one or more reflector bodies and/or shielding masks and/or corrective lenses and/or diffuser filters and/or coloured lenticular filters and/or reflex reflectors and/or fixing bezels and/or brackets or other auxiliary support structures, which are at least partially made of opaque polymeric material, and are arranged with the part made of opaque polymeric material resting on the inner surface of the rear casing 101.

With reference to Figures 2, 3 and 4, preferably the rear casing 101 and the internal component 104 are furthermore shaped/structured so as to realize, in the mutual contact area or areas 105, a shape coupling.

In further detail, the rear casing 101 and the internal component 104 are preferably shaped/structured so as to realize, in the mutual contact area or areas 105, a male-female coupling.

In greater detail, the/each internal component 104 is preferably provided with one or more protruding fixing pins 107 made of opaque polymeric material, each of which extends parallel to a predefined insertion direction d₀, and is adapted to arrange its distal end in abutment against the inner surface of rear casing 101, at a respective contact area 105.

Preferably the laser welding joint 106 is moreover located at the distal end of the fixing pin 107.

In addition, the/each fixing pin 107 is preferably also adapted to engage a corresponding receiving seat 108, which is realized directly on the rear casing 101, or rather on bottom of the rear casing 101, and is preferably substantially cup-shaped.

Preferably the mutual contact area 105 is furthermore located inside said receiving seat 108.

In further detail, the distal end of fixing pin 107 is preferably adapted to stably rest on the bottom of receiving seat 108, and the contact area 105 is preferably located on the bottom of receiving seat 108.

More specifically, the receiving seat 108 preferably has a shape substantially complementary to that of the distal end of fixing pin 107.

Clearly, in a different embodiment, the fixing pins may protrude cantilevered from bottom of rear casing 101 and the receiving seats may be located on the internal component(s) 104 made of opaque polymeric material.

Optionally the automotive lighting unit 100 may also comprise one or more cameras and/or one or more photosensitive sensors and/or one or more radar devices and/or one or more LiDAR (acronym of Light Detection and Ranging) instruments and/or other supplementary electronic devices, still housed inside the rigid housing formed/delimited by the rear casing 101 and by the front half-shell 102.

Also this or these supplementary electronic devices preferably include, or may include, one or more internal components at least partially made of opaque polymeric material, which are arranged with the part made of opaque polymeric material resting on the inner surface of rear casing 101 in at least one corresponding contact area 105, and are secured in a rigid non-removable manner to the rear casing 101 by means of at least one laser welding joint 106 made at said contact area 105.

With reference to Figures 1, 5, 6, 7, 8 and 9, the automotive-lighting-units assembly machine 1 is adapted to form the laser welding joint(s) 106 which, at the contact area or areas 105, are adapted to secure the internal component or components 104 in a rigid non-removable manner directly to the rear casing 101, or rather directly on the inner surface of rear casing 101.

The welding machine 1 firstly comprises: a workpiece carrying fixture 2, which is structured so as to temporarily accommodate and advantageously also retain the rear casing 101 with one or more internal components 104 inside; and a laser appliance 3 that, on command, is adapted to generate and direct at least one laser beam r towards/against the rear casing 101 accommodated in the workpiece carrying fixture 2.

In further detail, the workpiece carrying fixture 2 is structured so as to temporarily accommodate and advantageously also retain the rear casing 101 with inside one or more internal components 104 which rest on the inner surface of rear casing 101 at respective contact areas 105.

In other words, the workpiece carrying fixture 2 is adapted to accommodate a rear casing 101 provided with at least one sector made of opaque polymeric material, and also with at least one internal component 104 which, in turn, is located inside the rear casing 101 and is provided with at least one portion made of opaque polymeric material that rests on the sector made of opaque polymeric material of rear casing 101 in at least one contact area 105.

The laser appliance 3, in turn, is adapted to direct at least one laser beam r into the workpiece carrying fixture 2, in a direction such as to intersect a corresponding contact area 105 between the rear casing 101 and an internal component 104, so as to make at least one laser welding joint 106 at said contact area 105.

Preferably the laser beam r furthermore has a wavelength λ₀ higher than 400 nm (nanometres) and advantageously also higher than 900 nm (nanometres).

In further detail, the laser appliance 3 is adapted to direct the laser beam r towards the rear casing 101 stationary in the workpiece carrying fixture 2, so that said laser beam r passes through the sector made of opaque polymeric material of the rear casing 101 before intersecting said contact area 105.

In addition, the laser appliance 3 is structured so as to focus/concentrate said laser beam r in a predefined point in space, in the following called focal point P, which is located inside the workpiece carrying fixture 2, behind (beyond) said contact area 105 between the rear casing 101 and the internal component 104, so as to form the laser welding joint 106 at the contact area 105.

Preferably the distance w between the focal point P and the contact area 105 is furthermore lower than 3 mm (millimetres) and advantageously also higher than 0,2 mm (millimetres).

In further detail, the laser appliance 3 is provided with an optical focusing system, which is structured so as to focus/ concentrate said laser beam r in a focal point P that is located inside the workpiece carrying fixture 2, downstream of the contact area 105 towards which the laser beam r is directed.

In other words, the focal point P is located on the opposite side of the contact area 105 with respect to the origin of the laser beam r, or rather with respect to the laser appliance 3, and is spaced from said contact area 105.

More specifically, the laser appliance 3, or rather its optical focusing system, is preferably structured so as to shape the laser beam r substantially in the form of a cone, and the distance w between the focal point P, or rather the vertex of the cone, and the contact area 105 is preferably lower than 3 mm (millimetres) and advantageously also higher than 0,2 mm (millimetres).

In the example shown, in particular, the laser appliance 3, or rather its optical focusing system, is preferably structured so as to concentrate/focus said laser beam r in a focal point P, which is located inside the workpiece carrying fixture 2, downstream of said contact area 105 between the rear casing 101 and the internal component 104, at a distance w from the same contact area 105 preferably ranging between 0,2 and 2 mm (millimetres), and more advantageously between 0,5 to 1,5 mm (millimetres).

In addition, the optical focusing system is preferably structured so that the laser beam r forms, downstream of said optical focusing system, a cone with an opening angle α advantageously ranging between 10° and 90°.

In addition, the laser appliance 3 and the workpiece carrying fixture 2 are preferably structured so that the laser beam r directed towards the contact area 105 reaches/strikes the outer surface of the rear casing 101 advantageously passing through the workpiece carrying fixture 2.

In other words, the laser appliance 3 is preferably coupled to the workpiece carrying fixture 2 so that the laser beam or beams r reach the rear casing 101 without passing through the mouth of the same rear casing 101.

With reference to Figures 1, 5, 7 and 8, preferably the automotive-lighting-units assembly machine 1 additionally comprises also a pressing assembly 4, which is selectively adapted to press against the inner surface of rear casing 101 accommodated in the workpiece carrying fixture 2 one or more internal components 104 previously placed inside the same rear casing 101.

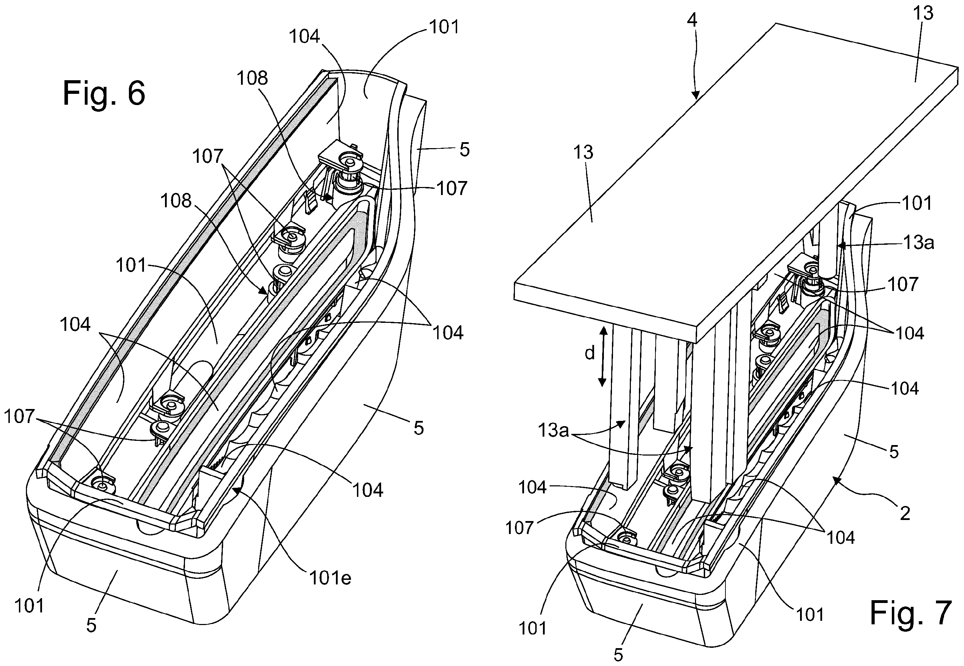

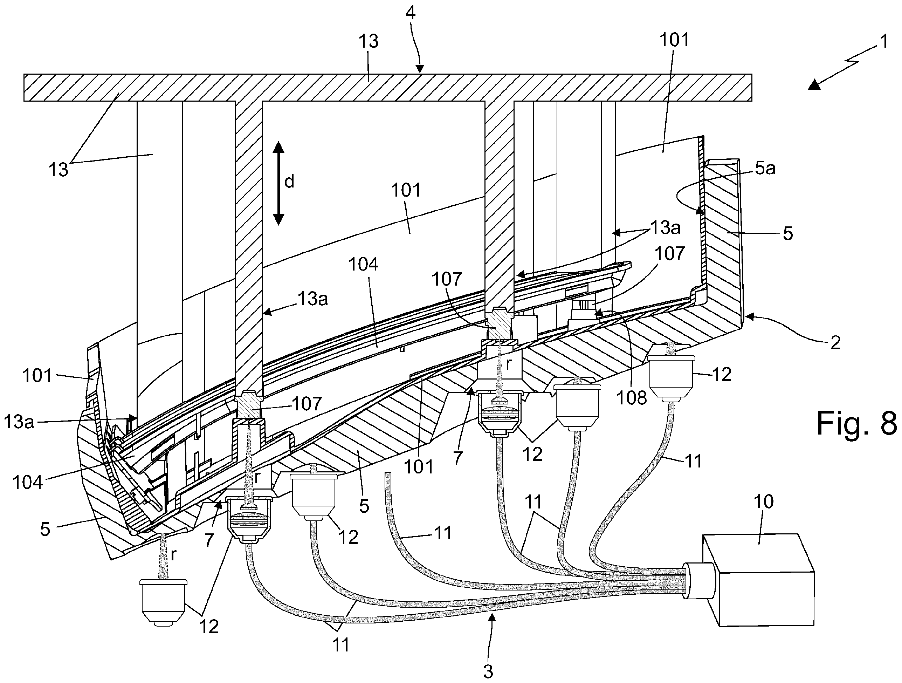

In further detail, the pressing assembly 4 is preferably movable from and towards the workpiece carrying fixture 2 or vice versa, and is preferably structured so as to penetrate, when it is at a predefined minimum distance from the workpiece carrying fixture 2 (see Figures 7 and 8), inside the rear casing 101 accommodated in the workpiece carrying fixture 2 through the mouth of the same rear casing 101, for abutting on at least a part of the internal component or componets 104 present inside the rear casing 101, and then press the same internal components 104 against the inner surface of said rear casing 101, at the relative contact area or areas 105.

With reference to Figures 1, 5, 6, 7 and 8, in particular, the workpiece carrying fixture 2 preferably includes: a workpiece carrying template 5 with substantially non-deformable structure, which is preferably made of metallic material, and is provided with a receiving seat 5a adapted to accommodate the rear casing 101; and preferably also one or more, advantageously electrically- or pneumatically- operated, locking members (not visible in the figures) which are at least partially located on the workpiece carrying template 5 and are adapted to lock/immobilize, on command, the rear casing 101 in the receiving seat of the workpiece carrying template 5.

In further detail, the receiving seat 5a of the workpiece carrying template 5 preferably has a shape substantially complementary to that of the rear casing 101, and is provided with an access mouth through which the rear casing 101 is inserted and removed from the same receiving seat 5a.

In addition, the workpiece carrying template 5 is preferably provided with one or more, advantageously in air, internal through passages 7, each of which extends through the body of the workpiece carrying template 5 up to the receiving seat 5a, and is structured so as to allow one or more laser beams r emitted by the laser appliance 3 to cross the same workpiece carrying template 5 substantially without energy losses or with minimum energy losses, until reaching the outer surface of the rear casing 101 momentarily accommodated in the workpiece carrying template 5.

In other words, the/each through passage 7 preferably ends in the receiving seat 5a of the workpiece carrying template 5, so as to be directly faced to the rear casing 101 momentarily accommodated in the same receiving seat.

In further detail, the/each through passage 7 preferably ends inside the receiving seat 5a of the workpiece carrying template 5, so as to be locally aligned to a corresponding contact area 105 between the rear casing 101 and an internal component 104.

In the example shown, in particular, the/each internal through passage 7 preferably consists of an opening, hole or rectilinear through duct, which is realized in the body of the workpiece carrying template 5, on a side opposite to the mouth of the receiving seat 5a.

Preferably said opening, hole or rectilinear through duct is moreover locally aligned to a corresponding contact area 105 present inside the rear casing 101 momentarily accommodated in the receiving seat 5a of the workpiece carrying template 5.

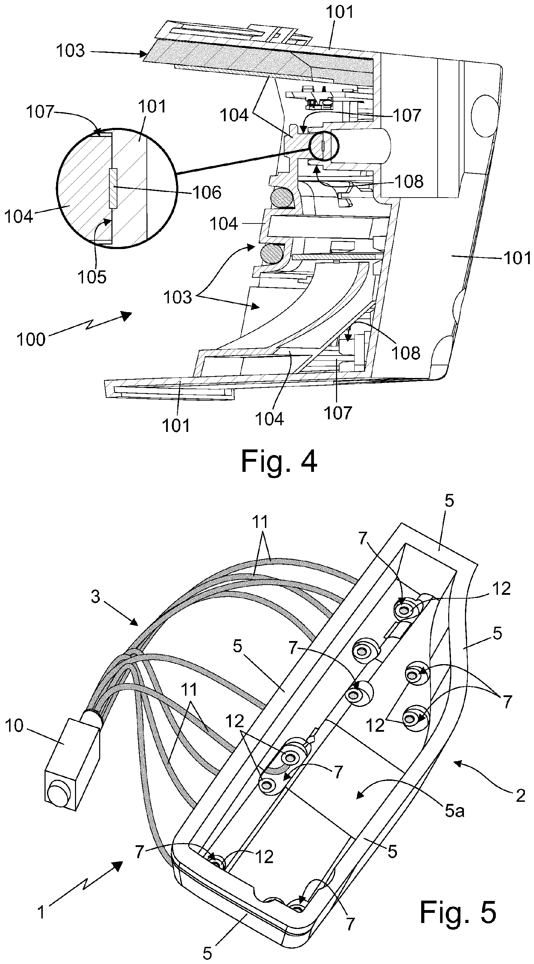

With particular reference to Figures 5 and 8, the laser appliance 3 preferably comprises: at least one electrically-powered laser source 10, which is able to emit, on command, a high-power laser beam, advantageously with a predefined and substantially constant intensity and/or emission spectrum; and one or more optic fibres 11, which ends substantially at the internal through passage or passages 7 of workpiece carrying fixture 2, and are optically coupled to the laser source 10 so as to channel the laser beam emitted by the laser source 10 to the respective through passage(s) 7.

The laser appliance 3 furthermore comprises, for each optic fibre 11, also an optical focusing device 12 that is located downstream of the optic fibre 11 so as to be crossed by the laser beam r coming out of the same optic fibre 11, and is coupled to a respective through passage 7 of the workpiece carrying fixture 2 so as to direct the laser beam r coming out of the optic fibre 11 towards the contact area 105 locally aligned to the same through passage 7.

In other words, the/each optical focusing device 12 is locally aligned to a respective through passage 7 of the workpiece carrying fixture 2, and is adapted to direct the laser beam r coming out of the relative optic fibre 11 inside the facing through passage 7 of the workpiece carrying fixture 2, towards the contact area 105 locally aligned to the same through passage 7.

In addition, the optical focusing device 12 is structured so as to concentrate said laser beam r in a focal point P, which is located inside the receiving seat 5a of the workpiece carrying template 5, spaced behind the contact area 105 which the laser beam r is directed to.

In further detail, the optical focusing device 12 is preferably structured so as to concentrate/focus the laser beam r in a focal point P, which is located beyond the contact area 105 which the laser beam r is directed to, at a distance w from said contact area 105 of lower than 3 mm (millimetres) and advantageously also higher than 0,2 mm (millimetres).

In greater detail, the optical focusing device 12 is structured so as to concentrate the laser beam r in a focal point P, which is located beyond the contact/support zone 105, at a distance w from the same contact area 105 preferably ranging between 0,2 and 2 mm (millimetres), or more advantageously ranging between 0,5 and 1,5 mm (millimetres).

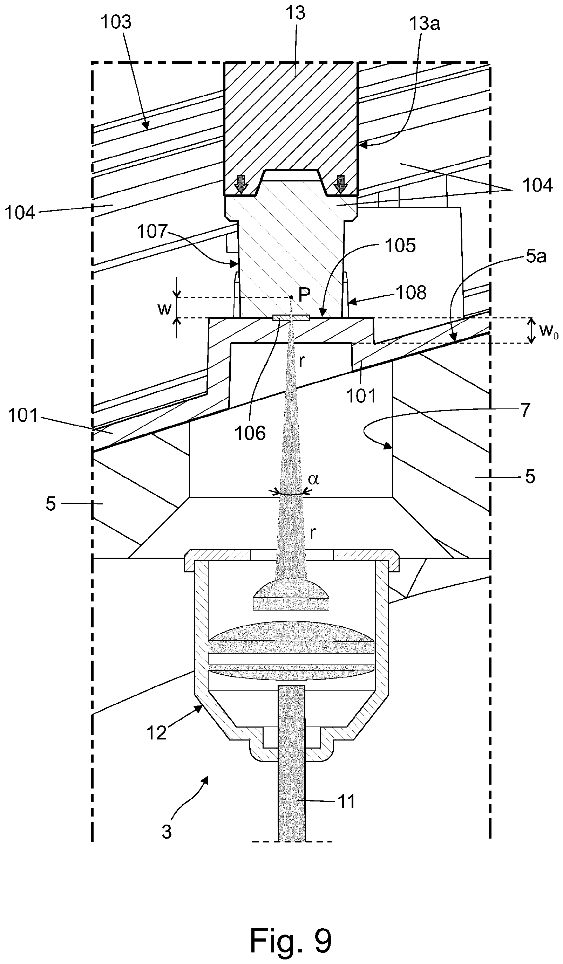

With reference to Figure 9, in the example shown, in particular, the optical focusing device 12 is preferably locally aligned to the corresponding contact area 105 between the rear casing 101 and an internal component 104, and preferably comprises one or more lenses advantageously of meniscus and/or planoconvex type, which are arranged one after the other so as to be crossed by the laser beam r coming out of the optic fibre 11.

In addition, in the example shown, the optical focusing device 12 is preferably structured so as to concentrate the laser beam r in a focal point P, which is located downstream of the contact area 105, at a distance w from said contact area 105 preferably ranging between 0,5 and 1,2 mm (millimetres).

In further detail, with reference to Figures 5, 7 and 8, in the example shown the workpiece carrying fixture 2 is preferably provided with a plurality of through passages 7, each aligned to a respective contact area 105.

The laser appliance 3, in turn, is preferably provided with a bundle of optic fibres 11 which end each at a respective through passage 7 of the workpiece carrying fixture 2, or rather of the workpiece carrying template 5; and a plurality of focusing devices 12 that are placed each downstream of a respective optic fibre 11 so as to be crossed by the laser beam r coming out of the same optic fibre 11.

In further detail, the bundle of optic fibres 11 is preferably optically coupled to the laser source 10 so as to split the high-power laser beam generated by the same laser source 10 into substantially equal parts between the various optic fibres 11 of the bundle.

Clearly, in a different embodiment, the bundle of optic fibres 11 may be coupled to the laser source 10 so as to distribute the high-power laser beam in a differentiated manner between the various optic fibres 11 of the bundle. For example, a higher laser power may be channelled towards the optic fibre 11 that has its distal end very far from the corresponding contact area or zone 105 between the rear casing 101 and the internal component 104.

In addition, the laser source 10 is preferably adapted to emit a laser beam with nominal power higher than 10 watt and/or a wavelength λ₀ higher than 400 nm (nanometres) and advantageously also higher than 900 nm (nanometres).

Each optical focusing device 12, on the other hand, is preferably aligned to a respective contact area 105 between the rear casing 101 and an internal component 104, and is preferably structured so as to at least partially engage a respective through passage 7 of the workpiece carrying fixture 2.

In addition, each optical focusing device 12 is preferably also structured so as to retain the distal end of the relative optic fibre 11 firmly in place at the relative through passage 7.

Clearly each optical focusing device 12 of laser appliance 3 is structured so as to concentrate the laser beam r coming out of the corresponding optic fibre 11 in a respective focal point Pi, which is located inside the receiving seat 5a of the workpiece carrying template 5, behind the contact area 105 which is locally aligned to the same focusing device 12.

Preferably, the distance wᵢ separating the focal point Pᵢ from the corresponding contact area 105 moreover varies according to the morphology of the rear casing 101 and/or of the internal component 104 in the neighbourhood of the contact area 105, and/or according to the spatial position of the focal point Pi inside the receiving seat 5a of the workpiece carrying template 5.

In the example shown, in particular, the optical focusing device 12 is provided with a fixing ferrule or terminal, which advantageously accommodates inside itself also the optics of the device, and is structured so as to lock the distal end of the optic fibre 11 in place at the relative opening, hole or rectilinear through duct of the workpiece carrying template 5.

With reference to Figures 7, 8 and 9, the pressing assembly 4, in turn, is preferably located in front of the workpiece carrying fixture 2, or rather the workpiece carrying template 5, and is preferably movable substantially rectilinearly from and towards the same workpiece carrying fixture 2 or vice versa.

In further detail, the pressing assembly 4 is preferably located in front of the mouth of the receiving seat 5a of the workpiece carrying template 5, and is movable substantially rectilinearly from and towards the same receiving seat.

In addition, the pressing assembly 4 preferably includes a locking template 13 with substantially non-deformable structure, which is advantageously made of metallic material, and is provided with one or more oblong protruding appendages, each of which is shaped so as to freely penetrate into the rear casing 101 momentarily accommodated in the workpiece carrying fixture 2 through the mouth of the same rear casing 101, and press a corresponding internal component 104 firmly in abutment against the inner surface of the rear casing 101, clearly at a relative contact area 105.

In further detail, the locking template 13 is preferably provided with one or more shaped protrusions 13a, which extend cantilevered parallel to the movement direction d of the pressing assembly 4 from and towards the workpiece carrying fixture 2 or vice versa.

In addition, the shaped protrusion or protrusions 13a of locking template 13 are preferably aligned each to a respective contact area 105, and are preferably structured so as to abut against the corresponding internal component or components 104 present inside the rear casing 101, each at the back of a respective fixing pin 107 of the internal component 104.

With reference to Figures 1 and 5 to 9, in the example shown, in particular, the workpiece carrying fixture 2 and the pressing assembly 4 are preferably arranged one spaced above the other, vertically aligned to one another, and are preferably movable one from and towards the other in a substantially rectilinear manner.

In further detail, the workpiece carrying template 5 is preferably oriented with the mouth of the receiving seat 5a turned upwards, so that the internal component(s) 104 remain in place by gravity inside the rear casing 101 temporarily accommodated in the same workpiece carrying template 5.

On the other hand, the pressing assembly 4, or rather the locking template 13, is preferably arranged spaced above the workpiece carrying fixture 2, or rather above the workpiece carrying template 5, with the shaped protrusion(s) 13a turned downwards, i.e. towards the workpiece carrying template 5.

Preferably the pressing assembly 4, or rather the locking template 13, is furthermore stationary in space, while the workpiece carrying fixture 2, or rather the workpiece carrying template 5, and advantageously also at least part of the laser appliance 3 is/are movable vertically from and towards the pressing assembly 4, or rather the locking template 13.

Clearly, in a different embodiment, the pressing assembly 4, or rather the locking template 13, may move rectilinearly from and towards the workpiece carrying fixture 2 that instead remains stationary in space.

With reference to Figures 1 and 8, in particular, the automotive-lighting-units assembly machine 1 is preferably provided with a rigid supporting framework 20, which is structured to be stably rested on, and optionally be also rigidly anchored to, the ground.

The workpiece carrying fixture 2 and the pressing assembly 4 are preferably located on the supporting framework 20 one above the other, vertically aligned to one another.

In further detail, the pressing assembly 4 is preferably fixed to the top of supporting framework 20, with the locking template 13, or rather the shaped protrusion(s) 13a of the locking template 13, turned downwards.

The workpiece carrying fixture 2, on the other hand, is preferably fixed to the supporting framework 20 spaced beneath the pressing assembly 4, with the mouth of the receiving seat 5a of the workpiece carrying template 5 turned upwards, and with the capability of moving vertically from and towards the pressing assembly 4.

The laser appliance 3, in turn, is preferably located on the supporting framework 20 beneath the workpiece carrying fixture 2, or rather beneath the workpiece carrying template 5.

In addition, the automotive-lighting-units assembly machine 1 preferably also comprises: an advantageously pneumatically- or hydraulically- operated, a moving device 21 which is adapted to vertically move the workpiece carrying fixture 2 from and towards the pressing assembly 4; and an electronic control device 22 which is adapted to command the moving device 21.

In further detail, the moving device 21 is adapted to move, on command, the workpiece carrying fixture 2 between a raised position (see Figures 7 and 8) in which the workpiece carrying template 5 is at a given minimum distance from the locking template 13 of the pressing assembly 4, and a lowered position (see Figures 1 and 6) in which the workpiece carrying template 5 is at a given maximum distance from the locking template 13 of the pressing assembly 4.

In the raised position, the shaped protrusion or protrusions 13a of the locking template 13 penetrate inside the rear casing 101 accommodated in the workpiece carrying fixture 2, so as to reach and press at least part of the internal component or components 104 present inside the rear casing 101 against the inner surface of said rear casing 101, at the relative contact area(s) or zone(s) 105.

In the lowered position, the shaped protrusion or protrusions 13a of the locking template 13 are instead far from the workpiece carrying template 5 so as not to hinder, or rather to facilitate, removal and insertion of the rear casing 101 from/into the receiving seat 5a of the workpiece carrying template 5.

In further detail, in the example shown, the supporting framework 20 preferably has a gantry structure, and is therefore provided with at least one pair of vertical uprights and an upper crossbeam that extends more or less horizontally and bridge-like between the upper ends of the vertical uprights.

The pressing assembly 4 is preferably rigidly fixed to the upper crossbeam of the supporting framework 20. The workpiece carrying fixture 2, on the other hand, is preferably fixed above a movable platform, which is located spaced beneath the upper crossbeam and is advantageously coupled in a vertically slidable manner to the vertical uprights of the supporting framework 20.

The moving device 21, on the other hand, preferably comprises a pair of double-acting hydraulic cylinders or the like, which are arranged in a vertical position each beside a respective vertical upright of supporting framework 20, and are adapted to raise and lower, on command, the movable platform that accommodates the workpiece carrying fixture 2.

Clearly, in a different embodiment, the moving system of machine 1 may move vertically the pressing assembly 4 from and towards the workpiece carrying fixture 2, or may move vertically both the workpiece carrying fixture 2 and the pressing assembly 4.

The assembly of automotive lighting unit 100 firstly comprises the step of realizing, preferably via injection moulding, the rear casing 101 provided with at least one sector made of opaque polymeric material; and the step of realizing, preferably via injection moulding, at least one internal component 104 having at least a part/portion made of opaque polymeric material.

After having realized the rear casing 101 and the internal component or components 104, the assembly of automotive lighting unit 100 comprises the step of placing said at least one internal component 104 inside the rear casing 101, with the part/portion made of opaque polymeric material resting on the sector made of opaque polymeric material of the rear casing 101 in at least one contact area 105; and then the step of securing said at least one internal component 104 in a rigid and substantially non-removable manner to the rear casing 101, making at least one laser welding joint 106 at said mutual contact area 105.

The step of rigidly securing the internal component 104 to the rear casing 101, moreover, entails directing, for a predefined time interval advantageously lower than 30 s (seconds), a laser beam r towards said at least one contact area 105, shaping the same laser beam r so as to concentrate/focus said laser beam r in a predefined point in space, in the following called focal point P, which is located downstream of the same contact area 105, at a given distance w from said contact area 105, in order to temporarily heating to melting point the only polymeric material present in the neighbourhood of the same contact area 105.

In further detail, the laser beam r is shaped substantially in the form of a cone. In addition, the distance w is preferably lower than 3 mm (millimetres) and/or greater than 0,2 mm (millimetres), and is selected so that the laser beam r causes, at the contact area 105 which it is directed to, a localized temperature peak/increase, the value of which is such as to cause the melting of the opaque polymeric materials that locally form, respectively, the internal component 104 and the rear casing 101.

Preferably, the laser beam r is moreover locally substantially perpendicular to said contact area 105 and/or has a wavelength λ₀ advantageously higher than 900 nm (nanometres).

In further detail, the assembly of automotive lighting unit 100 entails shaping the laser beam r so as to concentrate/ focus the same laser beam r in a focal point P, which is located beyond the contact area 105 between the internal component 104 and the rear casing 101, at a distance w from said contact area 105 preferably ranging between 0,2 and 2 mm (millimetres), and more advantageously ranging between 0,5 and 1,5 mm (millimetres).

In addition, the assembly of automotive lighting unit 100 preferably entails orienting the laser beam r so that, before reaching the contact area 105, it firstly passes through the piece locally made of the opaque polymeric material having lower absorption coefficient µ.

In other words, the piece turned towards the origin of laser beam r is made of an opaque polymeric material having a laser-beam absorption coefficient µ lower than the piece on the opposite side of the contact area 105 with respect to the origin of laser beam r.

In further detail, the absorption coefficient µ of the piece firstly crossed by the laser beam r is preferably lower by at least 25%, and more advantageously at least 40%, than the absorption coefficient µ of the piece crossed secondly by the laser beam r.

More specifically, the difference between the absorption coefficients µ of the two opaque polymeric materials is preferably greater than 35% of the absorption coefficient µ with higher value.

In the example shown, in particular, the laser beam r is preferably oriented so as to first pass through the sector made of opaque polymeric material of the rear casing 101, and the opaque polymeric material that forms said opaque-polymeric - material sector therefore has a laser-beam absorption coefficient µ lower than that of the opaque polymeric material forming the adjacent portion of internal component 104.

The focal point P where the laser beam r is concentrated is therefore advantageously located inside the internal component 104.

In the example shown, furthermore, the assembly of automotive lighting unit 100 preferably entails concentrating/focusing the laser beam r in a focal point P, which is located behind the contact area 105 between the internal component 104 and the rear casing 101, at a distance w from the same contact area 105 advantageously ranging between 0,5 and 1,2 mm (millimetres).

The making of the laser welding joint 106 at the contact area 105 between the internal component 104 and the rear casing 101 takes place for the following reasons, without compromising the structural integrity of the rear casing 101 and the internal component 104.

With particular reference to Figure 9, it is known that the laser beam r, as it penetrates into the rear casing 101 made of opaque polymeric material, progressively loses its energy that is transferred to the opaque polymeric material in the form of heat.

According to the Beer-Lambert law, the quantity of energy transferred by the laser beam r to the polymeric material per unit of length of the optical path increases with the growing of the laser-beam absorption coefficient µ associated to the polymeric material which is crossed by the laser beam r.

Even when the contact area 105 is located between two pieces/ portions made of opaque polymeric material, therefore, using a laser beam with adequate power it would be theoretically possible to pass through the entire thickness of the rear casing 101, reach the contact area 105, and there locally heat the polymeric material to softening temperature.

Clearly the use of a very powerful laser beam is not feasible in reality, because the laser beam would transfer a huge amount of energy to the opaque polymeric material it runs in before reaching the contact area 105 that, in Figure 9, is located at the distance w₀ from the incidence point, irreparably damaging the material. Obviously, the distance w₀ corresponds to the local thickness of the rear casing 101.

However, experimental tests have shown that, if the laser beam r directed towards the contact area 105 is conveniently focused/concentrated in a focal point P located beyond the contact area 105 between the rear casing 101 and the internal component 104, the amount of energy that the laser beam r transfers to the polymeric material during the initial part of the path, namely the section inside the thickness of the rear casing 101, although considerable, is nevertheless distributed over a relatively large area. Consequently the energy density along the initial part of the path of the laser beam r remains at relatively low values and advantageously such as not to melt or otherwise damage the polymeric material crossed.

In other words, by shaping the laser beam r substantially in the form of a cone before it penetrates into the rear casing 101, directed towards the contact area 105 between the rear casing 101 and the internal component 104, it is possible to maintain, up to the contact area 105, the energy density at relatively low values that can be withstood by the opaque polymeric material.

Clearly, despite the losses due to crossing of the first opaque polymeric material, while advancing towards the contact area 105 between the rear casing 101 and the internal component 104, the focused laser beam r affects a gradually smaller area progressively increasing the energy density.

If the laser beam r is conveniently shaped, in the neighbourhood of the contact area 105 the energy density reaches a value such as to locally melt the polymeric material.

In other words, the focused laser beam r melts the polymeric material located at the contact area 105 without, however, melting or otherwise damaging the polymeric material upstream of the contact area 105.

Experimental tests have moreover shown that the temperature trend of the polymeric material along the path followed by the laser beam r assumes an optimal profile if the laser beam r is concentrated/focused in a focal point P that is located beyond the contact area 105 between the rear casing 101 and the internal component 104, at a distance w from the same contact area 105 preferably lower than 3 mm (millimetres), or rather ranging between 0,2 and 2 mm (millimetres) and more advantageously ranging between 0,5 and 1,5 mm (millimetres).

Experimental tests have also shown that it is possible to obtain a good energy distribution along the path followed by the laser beam r, if the laser beam r is shaped so as to form a cone with an opening angle α advantageously ranging between 50° and 75°.

In addition, experimental tests have shown that the above behaviour is emphasised if the opaque polymeric material of the piece crossed first by the laser beam r (namely the piece located upstream of the contact area 105 along the path of the laser beam r), has an absorption coefficient µ lower than that of the opaque polymeric material of the piece downstream of the contact area 105, i.e. the second piece.

In other words, the temperature trend of the polymeric material along the path followed by the laser beam further improves if the absorption coefficient µ₁₀₁ of the polymeric material that forms the rear casing 101 is lower than the absorption coefficient µ₁₀₄ of the polymeric material that forms the internal component 104.

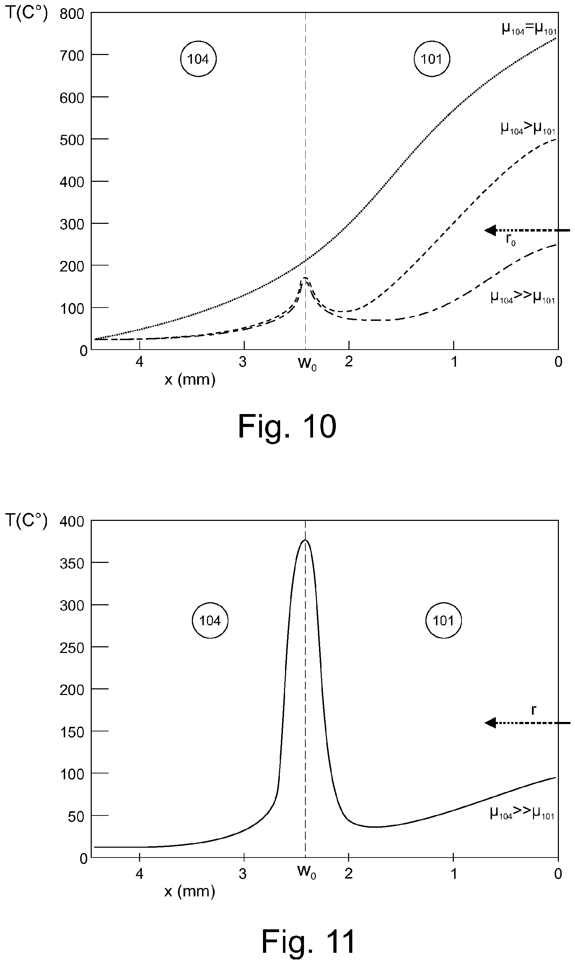

Figure 10 shows the temperature trend of the opaque polymeric material along the path followed by a non-shaped (i.e. non-focused) laser beam r₀ inside firstly the rear casing 101 and then the internal component 104, starting from the incidence point (x=0) of the laser beam r₀ on the rear casing 101, and as the difference between the absorption coefficient µ₁₀₁ of the polymeric material that forms the rear casing 101 and the absorption coefficient µ₁₀₄ of the polymeric material that forms the internal component 104 increases.

According to said graph, the temperature of the polymeric material assumes high values at the incidence point of the laser beam r₀ (x=0), and then decreases until it reaches the contact area 105 which is located at a distance w₀ from the incidence point, where a small temperature peak is detected caused by the higher absorption coefficient µ₁₀₄ of the polymeric material that forms the internal component 104.

In addition, with reference to Figure 10, the same experimental tests have shown that the peak temperature at the contact area 105, namely at the distance w₀ from the incidence point (x=0) of the non-shaped (i.e. non-focused) laser beam r₀, increases more or less proportionally to the value of the absorption coefficient µ of the polymeric material that forms the piece crossed by the laser beam r before reaching the contact area 105, namely the absorption coefficient µ₁₀₁ of the rear casing 101.

Unfortunately, a high absorption coefficient µ of the polymeric material upstream of the contact area 105 entails also having a high temperature of the opaque polymeric material at the incidence point (x=0) of the laser beam r₀.

Instead, if the laser beam r directed towards the contact area 105 is conveniently focused/concentrated in a focal point P located beyond the contact area 105 between the rear casing 101 and the internal component 104, the temperature trend of the polymeric material along the path followed by the laser beam changes radically.

In this case, the temperature peak at the contact area 105 reaches values significantly higher than those detectable at the incidence point (x=0) of the laser beam r.

Figure 11 shows the temperature trend of the polymeric material along the path followed by the shaped laser beam r, when the laser beam r is concentrated/focused in a focal point P that is located beyond/downstream of the contact area 105, at a distance w of nearly 0,6 mm from said contact area 105, and the absorption coefficient µ₁₀₁ of the polymeric material that forms the rear casing 101, i.e. the absorption coefficient µ of the material first crossed by the laser beam r, is equal to approximately half that of the polymeric material that forms the internal component 104, i.e. the absorption coefficient µ₁₀₄.

In other words, if the difference between the two absorption coefficients µ is adequate, the temperature peak at the contact area 105, namely at the distance w₀ from the incidence point of the laser beam r, reaches a value which is sufficient to temporarily melt the opaque polymeric material located at the contact area 105, and therefore make the laser welding joint 106, while the temperature value at the incidence point (x=0) of the laser beam r remains at values limited and well withstood by the opaque polymeric material, the entire thickness of which is crossed by the laser beam r.

In further detail, experimental tests have shown that, to make the laser welding joint 106 without excessively heating the opaque polymeric material at the incidence point of the laser beam r, the absorption coefficient µ of the piece first and entirely crossed by the laser beam r, i.e. the absorption coefficient µ₁₀₁ of the rear casing 101, must be preferably at least 25%, and more advantageously at least 40%, lower than the absorption coefficient µ of the piece reached second by the laser beam r, i.e. the absorption coefficient µ₁₀₄ of the internal component 104.

More specifically, the difference between the absorption coefficients µ of the two opaque polymeric materials must advantageously be higher than 35% of the absorption coefficient µ with higher value.

In addition, the absorption coefficient µ₁₀₁ of the polymeric material that forms the rear casing 101 must be preferably between 0,05 (1/mm) and 1 (1/mm), and more advantageously between 0,1 (1/mm) and 0,2 (1/mm). The absorption coefficient µ₁₀₄ of the polymeric material that forms the internal component 104, on the other hand, must be preferably between 0,2 (1/mm) and 3 (1/mm), and more advantageously between 0,8 (1/mm) and 2 (1/mm).

With reference to Figures 7 and 8, preferably the step of rigidly securing the internal component 104 to the rear casing 101 additionally entails pressing the internal component 104 to be welded against the inner surface of the rear casing 101, at the/each contact area 105, while the laser beam r heats the opaque polymeric materials in the neighbourhood of the contact area 105.

Lastly, the assembly of automotive lighting unit 100 preferably comprises, after the making of the various laser welding joints 106, also the step of welding the front half-shell 102 on the mouth of the rear casing 101. In other words, the assembly of automotive lighting unit 100 preferably ends with the welding of the front half-shell 102 on the mouth of the rear casing 101.

Operation of the automotive-lighting-units assembly machine 1 is easily inferable from the above description.

With reference to Figures 5 and 6, after realizing the rear casing 101 and the internal component or components 104, the assembly of automotive lighting unit 100 preferably comprises the step of placing the rear casing 101 in the workpiece carrying fixture 2, or rather inside the receiving seat 5a of the workpiece carrying template 5; and advantageously also the step of locking/immobilizing the same rear casing 101 in the workpiece carrying fixture 2, or rather inside the receiving seat of the workpiece carrying template 5.

With reference to Figure 6, after placing and advantageously also locking the rear casing 101 in the workpiece carrying fixture 2, the assembly of automotive lighting unit 100 preferably comprises the step of placing the internal component or components 104 inside the rear casing 101 stationary in the workpiece carrying fixture 2, each resting on the inner surface of the rear casing 101 in at least one respective contact area 105.

With reference to Figures 8 and 9, after placing the internal component or components 104 inside the rear casing 101, the assembly of automotive lighting unit 100 comprises the step of activating the laser appliance 3 so as to direct the laser beam(s) r towards the contact area(s) 105 between the rear casing 101 and the internal component(s) 104, shaping each laser beam r substantially in the form of a cone so as to concentrate/focus the same laser beam r in a focal point P, which is located downstream of the corresponding contact area 105, at a distance w from said contact area 105 preferably ranging between 0,2 and 2 mm (millimetres), or more advantageously between 0,5 and 1,5 mm (millimetres).

Preferably the assembly of automotive lighting unit 100 furthermore entails directing the laser beam or beams r towards the contact area or areas 105 between the rear casing 101 and the internal component or components 104, causing said laser beam or beams r to pass inside the through passages 7 present in the workpiece carrying fixture 2.

When reaches the relative contact area 105, the laser beam r locally heats up the rear casing 101 and the internal component 104, bringing the polymeric materials to melting temperature.

The subsequent re-hardening of the polymeric material joins the two pieces in a rigid and non-removable manner, forming the laser welding joint 106.

With reference to Figures 7 and 8, before activating the laser appliance 3, the assembly of automotive lighting unit 100 preferably also comprises the step of activating the pressing assembly 4 so as to press, against the inner surface of the rear casing 101 momentarily accommodated in the workpiece carrying fixture 2, the internal component or components 104 previously placed inside the same rear casing 101.

In further detail, the assembly of automotive lighting unit 100 preferably entails moving the locking template 13 of the pressing assembly 4 towards the workpiece carrying template 5 of the workpiece carrying fixture 2, so as to introduce the shaped protrusion(s) 13a of the locking template 13 inside the rear casing 101 present in the workpiece carrying fixture 2, up to reach and press the internal component(s) 104 against the inner surface of the same rear casing 101, at the respective contact areas 105.

Clearly the positioning of the internal component or componets 104 inside the rear casing 101 and/or the welding of the internal components 104 to the rear casing 101 can be carried out according to a predefined time sequence.

The advantages resulting from use of the assembly method described above and of the automotive-lighting-units assembly machine 1 are noteworthy.

The securing of the internal components 104 of the automotive lighting unit 100 to the rear casing 101 by means of the laser welding joints 106 allows to eliminate all, or in any case the majority of, the metal screws currently used to secure the internal components of the automotive lighting unit to its rear casing, with the remarkable reduction of weight and production costs that this entails.

Furthermore, the immediate securing of the internal component or components 104 by means of the laser welding joints 106 allows to eliminate, or at least drastically reduce, the number of shoulders, centring pins and/or snap-on locking tabs usually present inside the rear casing of an automotive lighting unit, thus considerably simplifying the structure of the mould used to produce the rear casing 101.

The creation of these centring and/or snap locking systems, in fact, results in an extremely complicated shape of the mould used to produce the rear casing of an automotive lighting unit assembled in a traditional manner.

In addition, the welding with the aid of laser beams r that are shaped so as to be concentrated/focused in focal points P located behind the corresponding contact areas 105, at a predefined distance w from the same contact areas 105, solves all the operating limits connected to the use of internal lighting pieces/components made of polymeric material opaque to visible light.

Furthermore, if the opaque polymeric material that constitutes the piece located upstream of the contact area 105, along the path of the laser beam r that makes the laser welding joint 106, has an absorption coefficient µ lower than that of the opaque polymeric material constituting the piece located downstream of the contact area 105, it is possible to drastically reduce the thermal stress on the first piece made of opaque polymeric material.

Lastly, since it is successful in welding the pieces made of opaque polymeric material to one another, the automotive-lighting-units assembly machine 1 greatly simplifies the automotive-lighting-unit assembly line, with all the advantages that this entails. In fact, the automatic screwdriver(s) are no longer necessary.

Finally, it is clear that modifications and variations may be made to the assembly method of the automotive lighting unit 100 and to the automotive-lighting-units assembly machine 1 without however departing from the scope of the present invention.

For example, in a lower-performing embodiment, the step of rigidly securing the internal component 104 to the rear casing 101 entails shaping the laser beam r so as to concentrate/ focus said laser beam r in a focal point P located at the contact area 105.

The optical focusing system of the laser appliance 3 is therefore structured so as to concentrate/focus the laser beam r in a focal point P that is located substantially at the contact area 105 between the rear casing 101 and the internal component 104.

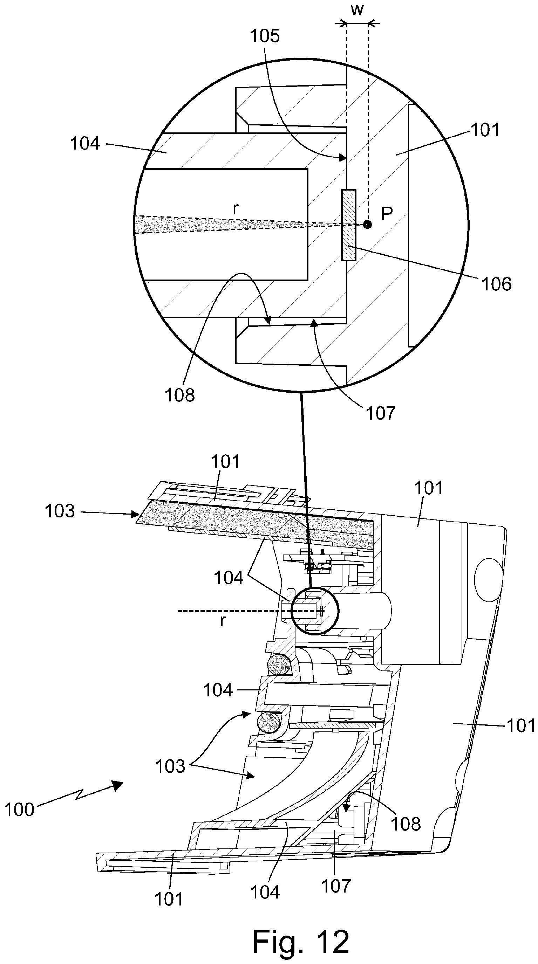

Furthermore, with reference to Figure 12, in a different embodiment the laser beam r is preferably oriented so as to intersect first the internal component 104, or rather the distal end of the fixing pin 107, and then the rear casing 101.

In this case, the absorption coefficient µ₁₀₁ of the polymeric material that forms the rear casing 101 is higher than the absorption coefficient µ₁₀₄ of the polymeric material that forms the internal component 104.

Clearly the laser beam r is preferably anyway concentrated/ focused in a focal point P which is located beyond the contact area 105 between the rear casing 101 and the internal component 104, at a distance w from the same contact area 105 preferably lower than 3 mm (millimetres), or rather ranging between 0,2 and 2 mm (millimetres) and more advantageously between 0,5 and 1,5 mm (millimetres).

In other words, in this embodiment the focal point P where the laser beam r is concentrated is located inside the thickness of the rear casing 101.

In addition, in a first embodiment variation of the machine 1, the laser appliance 3 may comprise a series of independent laser sources, each of which is structured so as to emit, on command, a laser beam r towards a corresponding contact area 105 between the rear casing 101 and an internal component 104, concentrating/focusing the same laser beam r in a focal point P, which is located beyond said contact area 105, at a distance w from the same contact area 105 preferably lower than 3 mm (millimetres), or rather ranging between 0,2 and 2 mm (millimetres) and more advantageously between 0,5 and 1,5 mm (millimetres) .

Clearly, in this variation, activation and deactivation of the independent laser sources may not take place simultaneously for all the laser sources.

In a second embodiment variation of the machine 1, on the other hand, the laser appliance 3 may comprise, in place of the bundle of optic fibres 11, a movable laser deflector, which is able to divert, on command, the laser beam produced by the laser source 10, on choice and alternatively, towards each focusing device 12 which, in turn, is aligned to a respective contact area 105 between the rear casing 101 and an internal component 104.

In this variation, therefore, the laser welding joints 106 would be made one after the other, preferably according to a predefined time sequence.

In a third embodiment variation of the machine 1, on the other hand, the laser appliance 3 may comprise, in place of the bundle of optic fibres 11, a movable robotic arm, which supports a laser source and is capable to align, on command, the laser source to any one contact area 105 between the rear casing 101 and an inner component 104, or to the optical focusing device 12 locally aligned to the same contact area 105, so as to direct the laser beam r towards the contact area 105, concentrating/focusing said laser beam r in a focal point P preferably located beyond said contact area 105.

Lastly, in a not-shown embodiment variation, the rear casing 101 may have one or more sectors made of transparent polymeric material, adjoined or surrounded by one or more sectors made of opaque polymeric material preferably having larger dimensions.

Clearly, in this variation the contact area 105 between the rear casing 101 and the/each internal component 104 is located at the or at one of the sectors made of opaque polymeric material that form the rear casing 101.

## Claims

1. An assembly method of an automotive lighting unit (100) comprising: a rear casing (101), which is concave in shape and is adapted to be fixed to the vehicle body; an at least partially transparent, front half-shell (102), which is arranged to close the mouth of said rear casing (101) so as to form/delimit a hollow housing; and at least one lighting assembly (103), which is located inside the rear casing (101) and is adapted to backlight the front half-shell (102);
the assembly method being **characterized in that** it comprises the steps of:
- realizing a rear casing (101) with at least one sector made of opaque polymeric material;
- realizing at least one internal lighting component (104) having at least one portion made of opaque polymeric material;
- placing said at least one internal lighting component (104) inside the rear casing (101), with said portion made of opaque polymeric material resting on the sector made of opaque polymeric material of the rear casing (101), in at least one contact area (105);
- securing said at least one internal lighting component (104) to the rear casing (101) by making at least one laser welding joint (106) at said at least one contact area (105).

2. The assembly method of an automotive lighting unit according to Claim 1, wherein the step of securing the internal lighting component (104) to the rear casing (101) entails directing, for a predefined time interval, a laser beam (r) towards said at least one contact area (105), concentrating the same laser beam (r) in a focal point (P) which is located at said contact area (105) or behind said contact area (105), at a predefined distance (d) from the contact area (105), so as to melt the polymeric material present in the neighbourhood of said contact area (105).

3. The assembly method of an automotive lighting unit according to Claim 2, wherein said distance (d) is lower than 3 mm and/or greater than 0,2 mm.

4. The assembly method of an automotive lighting unit according to Claim 2 or 3, wherein said predefined time interval is lower than 30 s.

5. The assembly method of an automotive lighting unit according to Claim 2, 3 or 4, wherein the concentration of the laser beam (r) in the focal point (P) takes place by shaping said laser beam (r) substantially in the form of a cone.

6. The assembly method of an automotive lighting unit according to any one of Claims from 2 to 5, wherein the laser beam (r) is oriented so as to cross first the piece made of the opaque polymeric material having locally the lower laser-beam absorption coefficient (µ).

7. The assembly method of an automotive lighting unit according to Claim 6, wherein the laser-beam absorption coefficient (µ) of the piece crossed first by the laser beam (r) is at least 250 lower than the laser-beam absorption coefficient (µ) of the piece crossed second by said laser beam (r).

8. The assembly method of an automotive lighting unit according to Claim 6 or 7, wherein the laser beam (r) is oriented so as to pass first through the rear casing (101), and the opaque polymeric material that forms the opaque-polymeric-material sector of the rear casing (101) has a laser -beam absorption coefficient (µ) lower than that of the opaque polymeric material that forms the adjacent portion made of opaque polymeric material of the internal lighting component (104).

9. The assembly method of an automotive lighting unit according to Claim 6 or 7, wherein the laser beam (r) is oriented so as to pass first through the internal lighting component (104), and the opaque polymeric material that forms the opaque-polymeric-material portion thereof has a laser-beam absorption coefficient (µ) lower than that of the opaque polymeric material that forms the adjacent opaque-polymeric-material sector of the rear casing (101).

10. The assembly method of an automotive lighting unit according to any one of Claims from 2 to 9, wherein the laser beam (r) has a wavelength (λ₀) higher than 900 nm.

11. The assembly method of an automotive lighting unit according to any one of Claims from 2 to 10, wherein the laser beam (r) is locally substantially perpendicular to said contact area (105).

12. The assembly method of an automotive lighting unit according to any one of Claims from 2 to 11, wherein the step of securing the internal lighting component (104) to the rear casing (101) also entails pressing said at least one internal lighting component (104) against the rear casing (101), at said at least one contact area (105), while the laser beam (r) heats up the opaque polymeric materials in the neighbourhood of said contact area (105).

13. An assembly machine (1) for automotive lighting units comprising a rear casing (101), a front half-shell (102) arranged to close the mouth of the rear casing (101), and one or more internal components (104) fixed inside said rear casing (101) ;
said automotive-lighting-units assembly machine (1) being **characterized in that** it comprises: a workpiece carrying fixture (2), which is adapted to accommodate a rear casing (101) provided with at least one sector made of opaque polymeric material, and also at least one internal component (104) which is placed inside the rear casing (101) and is provided with at least one portion made of opaque polymeric material that rests on the sector made of opaque polymeric material of the rear casing (101), in at least one contact area (105); and a laser appliance (3) which is adapted to generate and direct at least one laser beam (r) towards the rear casing (101) accommodated in the workpiece carrying fixture (2);
wherein said laser appliance (3) is adapted to direct said laser beam (r) towards the rear casing (101), so that the laser beam (r) crosses the opaque-polymeric-material sector of the rear casing (101) or the opaque-polymeric-material portion of said internal lighting component (104) before intersecting said contact area (105), and is provided with a focusing system (12) which is structured so as to focus/concentrate said laser beam (r) in a focal point (P) that is located inside said workpiece carrying fixture (2), spaced behind the contact area (105) or at the contact area (105), so as to make at least one laser welding joint (106) at said contact area (105).

14. The machine according to Claim 13, wherein the focusing system (12) is structured so as to concentrate said laser beam (r) in a focal point (P), which is located beyond said contact area (105), at a distance (d) from the contact area (105) lower than 3 mm and/or greater than 0,2 mm.

15. The machine according to Claim 14, wherein the distance (d) between said focal point (P) and the contact area (105) ranges between 0,5 and 1,5 mm.

16. The machine according to Claim 13, 14 or 15, wherein said laser beam (r) has a wavelength (λ₀) higher than 900 nm.

17. The machine according to any one of Claims from 13 to 16, wherein the workpiece carrying fixture (2) comprises a workpiece carrying template (5) which is provided with a receiving seat (5a) adapted to accommodate the rear casing (101), and at least one internal through passage (7) which extends through the workpiece carrying template (5) up to the receiving seat, is aligned to said contact area (105), and is structured to allow the laser beam (r) emitted by the laser appliance (3) to pass through the workpiece carrying template (5) substantially without energy losses, and reach the outer surface of the rear casing (101) accommodated in the workpiece carrying template (5) .

18. The machine according to any one of Claims from 13 to 17, **characterized by** also comprising a pressing assembly (4) which is movable from and towards the workpiece carrying fixture (2) or vice versa, and is adapted to selectively press said at least one internal lighting component (104) against the inner surface of the rear casing (101) accommodated in the workpiece carrying fixture (2).

19. An automotive lighting unit (100) comprising: a rear casing (101), which is concave in shape and is adapted to be fixed to the vehicle body; a front half-shell (102), which is arranged to close the mouth of said rear casing (101) and is provided with at least one transparent or semi-transparent sector; and at least one lighting assembly (103), which is located inside the rear casing (101) and is adapted to backlight the front half-shell (102);
the automotive lighting unit (100) being provided with at least one internal component (104) that is at least partially made of polymeric material and rests on the inner surface of the rear casing (101) in at least one contact area (105);
said automotive lighting unit (100) being **characterized in that** said rear casing (101) and said at least one internal component (104), at said contact area (105), are both made of opaque polymeric material, and **in that** said rear casing (101) and said at least one internal component (104) are rigidly secured to each other by means of a laser welding joint (106) made at said contact area (105).

20. The automotive lighting unit according to Claim 19, wherein said laser welding joint (106) is substantially spotlike or have the shape of a line.

21. The automotive lighting unit according to Claim 18 or 19, wherein the rear casing (101) and said at least one internal component (104), at said contact area (105), are made of opaque polymeric materials which have laser beam absorption coefficients (µ) different from one another.

22. The automotive lighting unit according to Claim 21, wherein the difference between the laser beam absorption coefficients (µ) of the two opaque polymeric materials is greater than 35% of the laser beam absorption coefficient (µ) with higher value.
